# EUROPÄISCHE PATENTANMELDUNG

(11) **EP 1 731 984 A1**
(43) Veröffentlichungstag der Anmeldung: **13.12.2006**
(21) Anmeldenummer: 05011661.5
(22) Anmeldetag: 31.05.2005
(51) Int. Cl.: G05D 23/19, G06F 3/033, F24F 11/00

(54) **Eingabe- und Anzeigevorrichtung für Prozessparameter**

(71) Anmelder: Siemens Schweiz AG, 8047 Zürich (CH)
(72) Erfinder: Copley, Jonathan Miles, 6300 Zug (CH)

(57) **Zusammenfassung**

Eine Eingabe- und Anzeigevorrichtung für Prozessparameter einer gebäudetechnischen Anlage, insbesondere einer HLK Anlage, hat eine Vorderseite, die ein Gehäuse der Eingabe- und Anzeigevorrichtung bedienerseitig abschliesst, und an der ein Bediener Prozessparameter eingeben und ablesen kann. Ein Eingabe- und Anzeigefeld erstreckt sich über die gesamte Vorderseite, so dass in einem Betriebszustand bedienerseitig nur das Eingabe- und Anzeigefeld sichtbar ist. Im Gehäuse ist ein Temperatursensor zur Bestimmung einer Umgebungstemperatur vorhanden.

## Beschreibung

Die hier beschriebenen Ausführungsbeispiele betreffen die Eingabe von Prozessparametern in eine Regel- und Steuerungsanlage, insbesondere eine Eingabe- und Anzeigevorrichtung für eine solche Anlage.

Vorrichtungen zur Eingabe von Prozessparametern sind für unterschiedliche Zwecke und Anwendungen bekannt. Beispielhafte Vorrichtungen haben Tasten, Drehknöpfe, berührungsempfindliche Eingabefelder (auch als Touchscreen bezeichnet), oder Kombinationen aus den genannten Teilen. So ist beispielsweise aus der EP 0 831 276 A1 ein Eingabegerät mit Touchscreen für die Steuerung eines Küchenofens bekannt. Berührungsempfindliche Eingabemasken sind darüber hinaus für Computer bekannt. Aus der WO 93 11 518 A1 sind berührungsempfindliche Eingabemasken, die aus zwei transparenten flexiblen Kunststofffolien bestehen, zwischen denen fast unsichtbare Elektroden angebracht sind, die bei Berührung einen elektrischen Kontakt herstellen und dadurch der Kontrolleinheit bzw. dem Steuergerät die Position der Berührung mitteilen, das heisst den Wunsch des Bedieners, so dass dieses die Position der Berührung mit der entsprechend unterlegten Funktion vergleichen kann und so die entsprechend angeforderte Funktion ausführt.

Eine weitere beispielhafte Anwendung für Eingabegeräte ist aus der Gebäudekontrolltechnik und insbesondere aus der Heizungs-, Lüftungs- und Klimatechnik ("HLK Technik") für Gebäude bekannt. Dort sind üblicherweise eine Anzahl von Komponenten wie beispielsweise einem Brenner, einer Pumpe, verschiedenen Ventilen, Thermostaten für die unterschiedlichen Räume und evtl. darüber hinaus noch einer Klimaanlage vorhanden, die allesamt geregelt bzw. gesteuert werden müssen und je nach Heizungsprogramm unterschiedliche Aufgaben wahrnehmen. Dabei müssen beispielsweise von dem Heizungssystem unterschiedliche Heiztemperaturen für unterschiedliche Zeiten des Tages oder für unterschiedliche Tage der Woche, der Saison oder während Ferientagen zur Verfügung gestellt werden. Die Regeleinrichtungen für grössere Gebäude, beispielsweise Industrieanlagen, sind dabei noch weitaus komplizierter, was oft erfordert, dass der jeweilige Benutzer komplizierte und dicke Bedienungsanleitungen durchlesen muss.

Darüber hinaus besteht die Schwierigkeit bei der Einstellung entsprechender Regelparameter bzw. Prozessparameter für die unterschiedlichen Prozesse innerhalb eines Gebäudekontrollsystems darin, dass der Benutzer häufig nur selten Veränderungen an der Einstellung entsprechender Prozessparameter vornimmt - beispielsweise im Sommer oder im Winter - so dass er hier im Gegensatz zu der Bedienung von Computern oder Küchengeräten meist nicht mehr die Bedienungsanleitung des Regelgeräts in seiner Erinnerung behält.

Diese Faktoren - die grosse Komplexität der entsprechenden Heizungsgeräte, die komplizierten Anweisungen an die Bediener solcher Heizungsgeräte, und die entsprechend grossen Zeitabstände zwischen der Bedienung solcher Geräte - führt schon seit geraumer Zeit dazu, dass ein Bedarf an einfach zu bedienenden und intuitiven Benutzeroberflächen für die Eingabe von Prozessparametern bei Heizungsreglern besteht.

Aus der US 6, 595, 430 ist ein Thermostat bekannt, das u. a. ein berührungsempfindliches Eingabe- und Anzeigefeld und mehrere Tasten hat. Ein Teil der Gehäusevorderseite umrahmt das Eingabe- und Anzeigefeld und die Tasten und trennt diese vom Eingabe- und Anzeigefeld. Die Bedienung des Thermostaten kann mit einem Finger oder einem stift erfolgen, der über das Eingabe- und Anzeigefeld geführt wird. Dieser Thermostat scheint jedoch hinsichtlich Funktionalität und variabilität auf die Programmierung des Temperaturverlaufs beschränkt zu sein.

Neben den genannten Problemen bezüglich Komplexität und Bedienerfreundlichkeit besteht bei Thermostaten ein Problem bezüglich der Installation. Es gibt prinzipiell zwei Arten, ein Thermostat an der Wand zu befestigen. Ein Thermostat kann entweder an eine Wandhalterung, die beispielsweise an die Wand geschraubt ist, befestigt werden, oder in eine Unterputzdose, die in die Wand eingelassen ist, eingesetzt werden. Im letzten Fall spricht man von einer Unterputzinstallation, wie sie zum Beispiel bei Lichtschaltern und Steckdosen zur Anwendung kommt.

Bei der Unterputzinstallation deckt üblicherweise ein Rahmen die Unterputzdose ab, so dass die Unterputzdose und der Übergang zwischen Dose und Wand abgedeckt und damit nicht sichtbar sind, z. B. gemäss CEE/VDE Technik, Bauform Typ A. Der Rahmen ist so gestaltet, dass beispielsweise ein Thermostat in eine Aussparung eingesetzt werden kann. Je nach Hersteller sind die Rahmen in verschiedenen Farben (typischerweise verschiedene Töne von weiss) und verschiedenen gestalterischen Ausführungen verfügbar. Die Rahmenfarbe und Gehäusefarbe des Thermostaten sind deshalb bei der Erstinstallation und vor allem beim späteren Austausch aufwendig aufeinander abzustimmen.

Es besteht daher die Aufgabe, Vorrichtungen zur Eingabe von Prozessparametern einer HLK Anlage dahingehend zu verbessern, dass einer Bedienperson gestattet wird, ohne Vorkenntnisse und ohne dem Studium langer und komplizierter Bedienungsanleitungen den Regler einer HLK Anlage intuitiv zu programmieren, ohne dass dabei die variabilität leidet, und dass zugleich das aufwendige farbliche Abstimmen von Rahmen und Gehäuse vermieden wird.

Die hier beschriebenen Ausführungsbeispiele betreffen eine Eingabe- und Anzeigevorrichtung für Prozessparameter einer gebäudetechnischen Anlage, insbesondere einer HLK Anlage. Die Eingabe- und Anzeigevorrichtung hat eine Vorderseite, die ein Gehäuse der Eingabe- und Anzeigevorrichtung bedienerseitig abschliesst, und an der ein Bediener Prozessparameter eingeben und ablesen kann. Ein Eingabe- und Anzeigefeld erstreckt sich über die gesamte Vorderseite, so dass in einem Betriebszustand bedienerseitig nur das Eingabe- und Anzeigefeld sichtbar ist. Im Gehäuse ist ein Temperatursensor zur Bestimmung einer Umgebungstemperatur vorhanden.

Die hier beschriebenen Ausführungsbeispiele einer Vorrichtung zur Eingabe von Prozessparametern zeichnen sich unter anderem dadurch aus, dass vom Gehäuse kein Plastikmaterial sichtbar ist, sondern nur das LCD Display. Dadurch ist die Vorrichtung hinsichtlich der Installation im wesentlichen farbneutral.

Auch die Bedienerfreundlichkeit und die Variabilität sind gegeben. Durch die Wahl unterschiedlicher Bedienebenen können pro gewählter Bedienebene die entsprechenden Prozessparameter eingegeben werden, wobei hier unterschiedliche Anzeige-/Bedienfelder erscheinen. Diese Anzeige-/Bedienfelder sind derart variabel gestaltet, dass sie pro Bedienebene zum einen entweder als Anzeige- oder Bedienfeld fungieren oder auch keine Aufgabe wahrnehmen und sich jeweils in ihrer Funktion, ihrer Bedeutung und ihrer Grösse ändern, wobei je nach Bedienebene die Bedienperson, durch unterschiedlich gestaltete Anzeige-/Bedienfelder, die an unterschiedlichen Positionen der Eingabe- und Anzeigevorrichtung in unterschiedlichen Grössen und mit unterschiedlichen Funktionen auftauchen, geleitet wird und so eine intuitive Benutzerführung gewährleistet wird.

Der Benutzer hangelt sich anhand einfacher, intuitiv selbsterklärender Symbole durch Drücken der entsprechenden Bedienfelder menüartig durch die Bedienebenen, die durch die Anzeige unterschiedlicher Bedienfelder an unterschiedlichen Positionen und mit unterschiedlicher Grösse den Benutzer schrittweise durch die Programmierung des Heizungsreglers führen.

Die Wahl der unterschiedlichen Bedienebenen kann dabei auf unterschiedliche Art und weise erfolgen: Zum einen ist es möglich, die unterschiedlichen Bedienebenen mittels bestimmter Anzeige-/Bedienfelder auszuwählen. Wird also ein bestimmtes Bedienfeld aktiviert, so ändern sich Teile des oder auch das gesamte Eingabefeld, es erscheinen neue Bedien-/Anzeigefelder mit unterschiedlicher Grösse und Funktion und zeigen somit dem Benutzer auf einfache Art und weise an, welchen Prozessparameter er gerade verstellt und welcher Prozesszustand bzw. welcher Prozessparameter gerade aktuell ist.

Eine andere Möglichkeit besteht darin, durch die verwendung verschiedener Karten das Eingabefeld der Eingabe- und Anzeigevorrichtung zu modifizieren, so dass je nach verwendeter Karte die entsprechenden Bedienfelder des Eingabefeldes unterschiedliche Funktionen, Bedeutungen und Grössen aufweisen. Die Karten sind dabei mit Informationen zur Wahl der unterschiedlichen Bedienebenen ausgestattet. Die Karten definieren dann die unterschiedlichen Bedienebenen, die Funktionen der Eingabe- und Anzeigevorrichtung und die Darstellung und Wahl von zumindest Teilen der Anzeige-/Bedienfelder. Die Karten können als magnetische, elektromechanische (RF), mechanische, elektronische oder optische Datenträger ausgelegt sein und beispielsweise die Form einer Kredit- oder Telefonkarte aufweisen, die entweder einen Magnetstreifen, einen elektronischen Chip (einschliesslich eines RF-Transponder Chips) oder eine Lochrasterung aufweist, um der Eingabe- und Anzeigevorrichtung mitzuteilen, welche Funktion eingestellt werden soll, oder welche Funktion die Eingabe- und Anzeigevorrichtung übernehmen soll. Die Eingabe-und Anzeigevorrichtung weist entsprechende Mittel zur Kommunikation mit der entsprechenden Karte auf.

Mittels solcher Karten, die auf der Eingabe- und Anzeigevorrichtung mit den entsprechenden Anzeigen teilweise oder ganz korrespondieren und diese visuell ersetzen, bzw. ergänzen oder funktionell einstellen, optimieren und/oder parametrieren, kann der Servicefachmann oder auch der Nutzer der entsprechenden einzustellenden Anlage schnell und kostengünstig die Eingabe- und Anzeigevorrichtung programmieren und einstellen. Die anlagespezifisehen Parameter werden vor Ort beispielsweise durch den Einschub der Karte übertragen und mit einem Anlageschema und der Tastenzuordnung versehen. Durch das Einsetzen der Karte wird dann das Gerät parametriert, kontrolliert und optimiert. Diese Kombination von Karte, variablen Anzeige-/Bedienfelder und automatische Zuordnung derselben reduziert massgeblich die Zeit des Servicepersonals vor Ort sowie die Wartungs-, Installations-, und Umprogrammierkosten.

Vorteilhafterweise werden bei der Eingabe der Prozessparameter durch entsprechende Anzeige-/ Bedienfelder die jeweils aktuellen Prozessparameter interaktiv verändert, so dass die Bedienperson stets eine Kontrolle darüber hat, was sie gerade tut. So erleichtert die dynamische veränderung der entsprechenden Prozessparameter bei der Eingabe von entsprechenden werten in spielerischer Art und Weise die Programmierung des Regelgeräts. Hierbei sind die unterschiedlichsten graphischen Möglichkeiten gegeben, um der Bedienperson die Eingabe der verschiedenen Prozessparameter zu erleichtern.

Das Eingabefeld ist in einem Ausführungsbeispiel ein berührungsempfindliches und transparentes Eingabefeld, welches die unterschiedlichen Bedienfelder in bekannter Art und weise durch ein transparentes bzw. semipermeables Touchscreen-Element realisiert. Diese transparenten Elemente sind bekannt und in grosser Stückzahl am Markt erhältlich. Dabei ist es vorteilhaft, das Eingabefeld lösbar mit der Eingabe- und Anzeigevorrichtung zu verbinden und entsprechende Kommunikationsmittel vorzusehen, um eine Kommunikation zwischen dem Eingabefeld und der Eingabe- und Anzeigevorrichtung zu ermöglichen. Diese Kommunikation kann entweder drahtgebunden, funkgesteuert oder optisch erfolgen, so dass die Bedienperson beispielsweise mit einem portablen Eingabefeld unterschiedliche Regler innerhalb ihres Hauses programmieren kann.

So lassen sich die unterschiedlichsten Arten von Bedienfeldern bzw. Anzeigefeldern definieren, die entweder eine Anzeige oder eine Bedienfunktion haben oder die lediglich als funktionsloses Glas für das Sichtbarmachen darunterliegender LCD-Anzeigen, Oberfläche, Symbole oder Graphiken fungieren. Die Kombination der Anzeige-/Bedienfelder ist je nach ausgewählter Bedienebene derart gestaltet, dass die einzelnen Felder entweder zur Anzeige oder zur Bedienung oder zur Anzeige und zur Bedienung dienen oder aber auch zur Abdeckung oder zur Sichtbarmachung von darunterliegenden Oberflächen dienen. Zwischen der LCD-Anzeige bzw. der Anzeige-/Bedienoberfläche und dem berührungsempfindlichen Element, d.h. dem "Touchscreen"-Eingabefeld, können auch farbige Plastik- oder Papierkarten eingeschoben werden, die Teile des darunterliegenden Anzeigefeldes verdecken, um hier besondere Eingabe-/Anzeigeoptionen zu realisieren. Dadurch lassen sich besondere Elemente hervorheben, wie beispielsweise die Zeiten der Absenktemperatur und die Zeiten der Heizintervalle, die teilweise durch die farblich markierten Karten, teilweise durch das darunterliegende Display markiert, hervorgehoben, oder beleuchtet werden können, um so dem Benutzer anzuzeigen, dass dieses Feld derzeit aktiviert oder deaktiviert ist.

Diese und weitere Aspekte, Vorteile und neue Merkmale der beschriebenen Ausführungsbeispiele werden beim Studium der folgenden detaillierten Beschreibung mit Bezug auf die beiliegenden Zeichnungen deutlich. In den Zeichnungen haben gleiche Elemente die gleichen Bezugszeichen. Es zeigen:
Figur 1 eine schematische vorderansicht eines Ausführungsbeispiels einer Vorrichtung zur Eingabe von Prozessparametern;
Figur 2 eine schematische Seitenansicht der Vorrichtung aus Figur 1;
Figur 3 eine schematische Ansicht der Vorrichtung aus Figur 1 eingesetzt in einen Rahmen;
Figur 4 eine schematische Ansicht einer ersten beispielhaften Bedienebene der Eingabe- und Anzeigevorrichtung;
Figur 5 eine schematische Ansicht zweier zweiten beispielhaften Bedienebenen;
Figur 6a eine schematische Ansicht einer dritten beispielhaften Bedienebene;
Figur 6b eine schematische Ansicht einer vierten beispielhaften Bedienebene;
Figur 6c eine schematische Ansicht einer fünften beispielhaften Bedienebene;
Figur 7 eine schematische Ansicht einer weiteren fünften beispielhaften Bedienebene;
Figur 8 eine schematische Ansicht einer Variation der Bedienebene nach Figur 7; und
Figur 9 eine schematische Ansicht einer dynamischen 5. beispielhaften Bedienebene mit zugehöriger 6. beispielhafter Bedienebene.

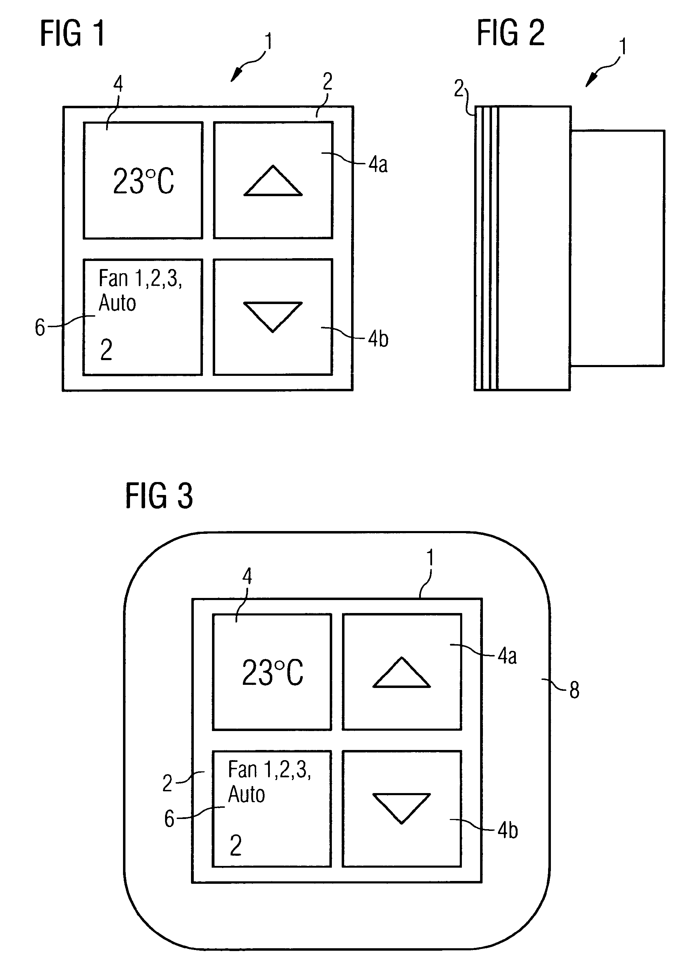

Figur 1 zeigt eine schematische Vorderansicht eines Ausführungsbeispiels einer vorrichtung 1 zur Eingabe von Prozessparametern. Diese Eingabevorrichtung 1 ist in einem Anwendungsbeispiel ein Thermostat für eine HLK Anlage. Die Eingabevorrichtung 1 ist in einem Raum installiert und über eine Datenleitung mit einem Regler einer HLK Anlage verbunden. Für die Thermostatanwendung hat die Eingabevorrichtung 1 Komponenten, die die jeweilige Raumtemperatur messen und dem Regler ein Steuersignal zur Verfügung stellen, so dass dieser entsprechend den eingestellten Temperaturen zu den unterschiedlichen Tageszeiten die Warmwasserleitung des Heizungskörpers entsprechend regelt.

Der Fachmann erkennt jedoch, dass ein Thermostat nur ein Beispiel für eine Eingabevorrichtung 1 ist und nicht darauf beschränkt ist. In anderen Beispielen kann die Eingabevorrichtung für weitere Cebäudeautomatisationsaufgaben verwendet werden, so z. B. für Sicherheitssysteme, Brandschutzanlagen, Fenster- und Storensteuerungen.

Wie in den Figuren 1 und 2 gezeigt, hat die Eingabevorrichtung 1 ein Gehäuse mit einer quadratischen Vorderseite. Über die gesamte Fläche der Vorderseite erstreckt sich im gezeigten Ausführungsbeispiel ein berührungsempfindliches Eingabe- und Anzeigefeld 2. Dieses Eingabe- und Anzeigefeld 2 deckt das Gehäuse der Eingabevorrichtung 1 von vorn ab und ist bündig mit seitlichen wänden des Gehäuses. Von vorn sind daher im Wesentlichen kein Rahmen oder andere Teile des Gehäuses sichtbar.

Figur 3 zeigt eine schematische Ansicht der Eingabevorrichtung 1 eingesetzt in einen Rahmen 8. In diesem eingesetzten Zustand umgibt der Rahmen 8 das Eingabe- und Anzeigefeld 2. Wie aus Figur 3 ersichtlich, ist nur das Eingabe- und Anzeigefeld 2 und der Rahmen 8 sichtbar. Die Farbe des Rahmens 8 muss daher nicht auf die Farbe des Gehäuses der Eingabevorrichtung 1 abgestimmt werden. Die Erstinstallation und vor allem ein späteren Austausch werden daher vereinfacht.

In dem in den Figuren 1 und 3 gezeigten Ausführungsbeispiel ist das Eingabe- und Anzeigefeld 2 ein Touchscreen Element und schematisch in vier Teilfelder unterteilt. Ein Feld 4 zeigt die momentane Raumtemperatur an. Felder 4a, 4b sind Eingabefelder und erlauben es, die Raumtemperatur zu erhöhen (4a) oder abzusenken (4b). Ein Feld 6 zeigt einen Betriebsmodus eines Gebläses an. Durch wiederholtes Drücken des Feldes 6 lässt sich einer der möglichen Modi (1, 2, 3, Auto) wählen.

Neben dem gezeigten Ausführungsbeispiel mit vier Teilfeldern kann das Eingabe- und Anzeigefeld 2 ganz allgemein matrixförmig in mehrere Zeilen und mehrere Spalten aufgeteilt sein. Jeder Zelle einer solchen Matrix kann eine Funktion (z. B. Eingabe oder Anzeige) zugeteilt werden. Sind mehrere Bedienebenen vorhanden, kann die Funktion je nach momentan aktiver Bedienebene unterschiedlich sein.

Die Eingabe- und Anzeigevorrichtung 1 hat einen im Gehäuse vorhandenen Temperatursensor zur Bestimmung der Raumtemperatur- Das Eingabe- und Anzeigefeld 2 hat eine gegenüber dem Gehäuse verbesserte Wärmeleitfähigkeit, so dass der Temperatursensor Änderungen der Raumtemperatur schneller wahrnimmt. In einem Ausführungsbeispiel kann das Gehäuse zusätzlich eine oder mehrere Öffnungen haben, die einen Luftaustausch zwischen dem Gehäuseinneren und dem Raum ermöglichen. Auch dadurch kann der Temperatursensor Temperaturänderungen schneller feststellen.

In einem Ausführungsbeispiel der Eingabe- und Anzeigevorrichtung 1 kann ein Hohlraum zur Aufnahme von Karten, z.B. Steckkarten, vorgesehen sein. Diese Karten weisen entsprechende Mittel auf, so dass die Vorrichtung 1 erkennen kann, welche Karte innerhalb einer Öffnung des Hohlraumes eingeschoben ist. Je nach eingeschobener Karte wird das Eingabe- und Anzeigefeld 2 mit unterschiedlichen Funktionen, Bedeutungen und/oder Grössen ausgestattet, so dass entweder einzelne Anzeige-/Bedienfelder einzelne Funktionen haben oder eine Gruppe von Anzeige-/Bedienfeldern zu einer einzelnen Funktion oder Anzeige zusammengefasst werden.

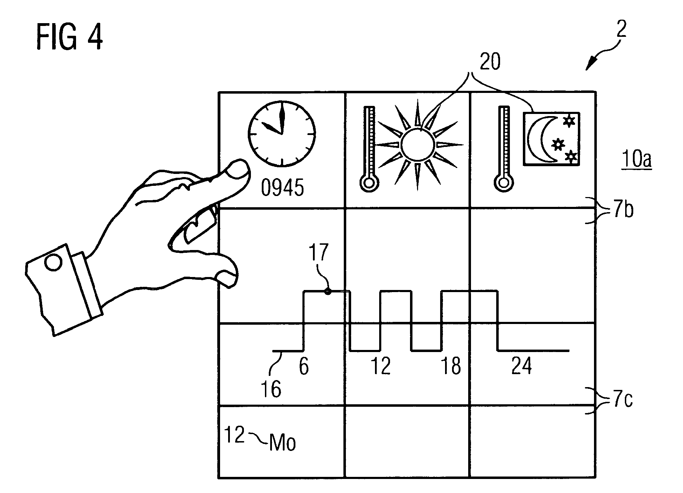

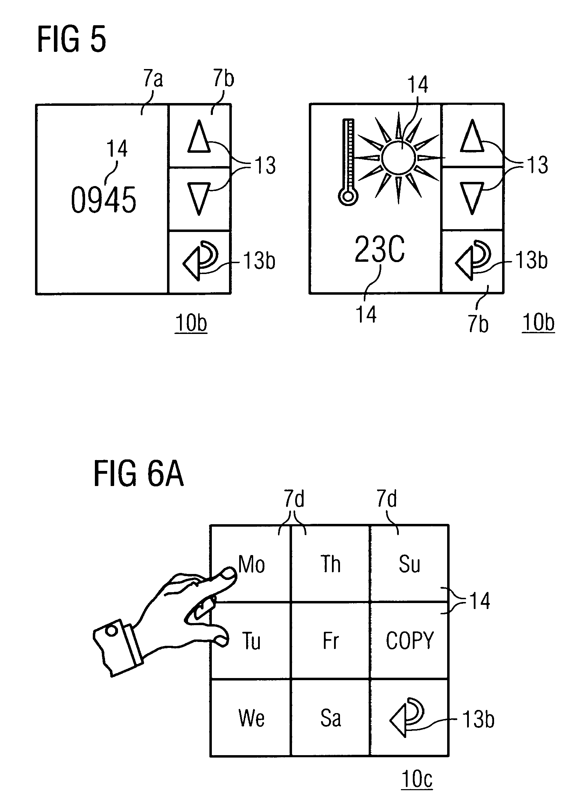

Figur 4 zeigt beispielhaft eine erste Bedienebene 10a des Eingabe- und Anzeigefeldes 2, welches in zwei obere Reihen von jeweils sechs variable Anzeige-/Bedienfelder 7b und in zwei untere feste Anzeigefelder 7c unterteilt ist. Das oberste linke variable Anzeige-/Bedienfeld 7b zeigt die aktuelle Uhrzeit, wobei durch Druck auf dieses Bedienfeld das gesamte Eingabe- und Anzeigefeld 2 verändert wird und beispielsweise eine zweite Bedienebene 10b nach Figur 5 (auf der linken Seite) erscheint, welches lediglich vier Felder beinhaltet. Auf der linken Seite ist das Anzeigefeld 7a erkennbar, welches die aktuelle Uhrzeit, hier 09.45 Uhr, anzeigt. Durch Drücken der oberen beiden rechten Bedienfelder 7b lässt sich die Uhrzeit entsprechend verstellen, während ein unterstes rechtes Bedienfeld 13b dazu dient, wieder in die erste Bedienebene 10a nach Figur 4 zurückzuspringen.

Durch Drücken des obersten mittleren Anzeige-/Bedienfeldes 7b nach Figur 4 wird beispielsweise in die nach Figur 5 dargestellte zweite Bedienebene 10b gesprungen, die ebenso wie die zweite Bedienebene 10b zur Einstellung der Uhrzeit bedient werden kann. Hier ist auf der linken Seite die aktuelle Tagestemperatur, hier 10° C dargestellt, während wiederum mit den rechten beiden oberen Bedienfeldern 13 die aktuelle Solltagestemperatur (beispielsweise die gewünschte Raumtemperatur) eingestellt werden kann. Durch Druck auf das untere rechte Bedienfeld 7b kann durch ein Return-Feld 13b wieder zurück in den Bildschirm, das heisst in die erste Bedienebene 10a nach Figur 4 gesprungen werden.

Ebenso wird mit dem rechten obersten Anzeige-/Bedienfeld 7b zur Einstellung der entsprechenden Nachttemperatur verfahren. Unterhalb der obersten drei Anzeige-/Bedienfelder 7b nach Figur 4 findet sich die Einstellung des Raumtemperatur-Thermostaten über den gesamten Tag. Erkennbar sind hier auf den unteren beiden Zeilen des Eingabe- und Anzeigefeldes 2 die Anzeigefelder 7c, die jeweils die unterschiedlichen Uhrzeiten sowie den Tag 12, das heisst beispielsweise der jeweils aktuelle Tag, anzeigen. Die rechteckförmige Kurve zeigt die jeweils eingestellten Raumtemperaturen zu unterschiedlichen Zeiten des Tages, wobei ein Punkt 17 die jeweilige Uhrzeit, die auch im obersten linken Anzeigefeld 7b dargestellt ist anzeigt.

Figur 6a zeigt eine dritte Bedienebene 10c, die beispielsweise durch Drücken des Return-Feldes 13b nach Figur 5 erreicht werden kann, sofern dies vorgesehen ist. Hier sind die unterschiedlichen wochentage angegeben, die wiederum durch unterschiedliche grosse Anzeige-/Bedienfelder 7d dargestellt werden. Die Anzeige der entsprechenden Wochentage 14 dient zur Einstellung der unterschiedlichen Heizkurven für jeden der einzelnen Wochentage, wobei beispielsweise eine Kopierfunktion durch ein Bedienfeld COPY eingebaut ist. Durch Bedienen des Return-Feldes 13b wird dann wieder in die erste Bedienebene 10a zurückgesprungen. Gleichermassen ist es jedoch auch möglich, durch Drücken der oben beschriebenen entsprechenden Bedienfelder der ersten Bedienebene 10a in die nach Figur 6a dargestellte Bedienebene 10c zu springen, so dass hier durch Drücken der entsprechenden Wochentage dann in die jeweils zweiten Bedienebenen 10b nach Figur 5 gesprungen wird, um hier für unterschiedliche Uhrzeiten und für unterschiedliche Tageszustände die jeweiligen Temperaturen eingeben zu können.

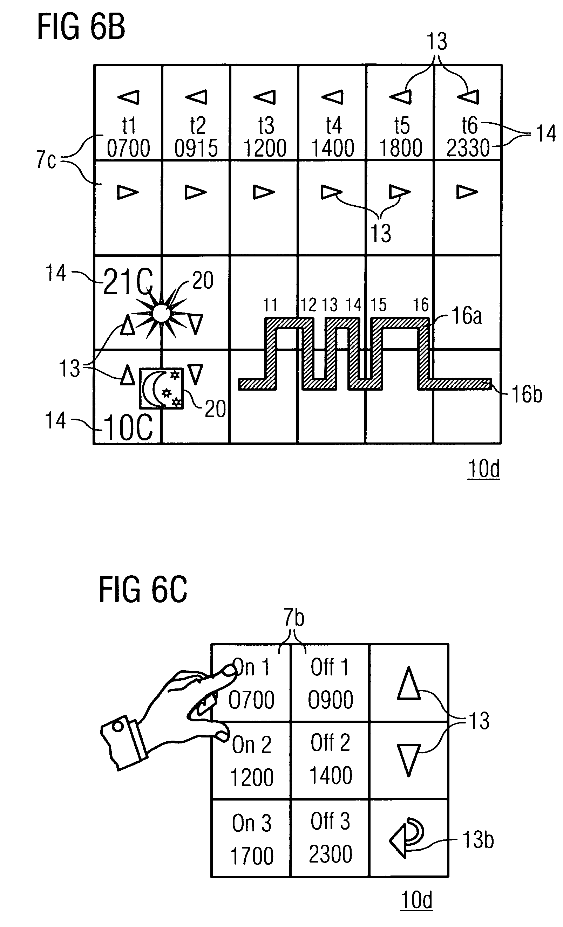

Figur 6b zeigt eine vierte Bedienebene 10d, die sich dadurch auszeichnet, dass die in Figur 4 dargestellte rechteckförmige Kurve intuitiv durch Festlegung der einzelnen Zeitpunkte t1 bis t6 eingestellt werden kann. Hier dienen die obersten beiden Reihen der Anzeige-/Bedienfelder 7e sowohl zur Einstellung der unterschiedlichen Zeiten t1 bis t6 als auch zur Anzeige der Zeit als solches, das heisst der jeweils aktuell eingestellten Uhrzeit für den jeweiligen Zeitpunkt, die sich wiederum dynamisch durch Drücken der Pfeilfelder verändert. Statisch ist in diesen Feldern jeweils die Angabe der einzelnen Zeitpunkte t1 bis t6 vorgesehen. So erfüllen diese ersten beiden Reihen der Anzeige-/ Bedienfelder 7e das Erfordernis von Anzeigefeldern, von Bedienfeldern und von festen Anzeige-/Bedienfeldern je nach eingestellter Bedienebene.

Die unteren beiden Reihen von Anzeige-/Bedienfeldern 7e dienen zum einen zur dynamischen Anzeige des jeweils eingestellten Prozessparameters t1 bis t6 sowie zur Anzeige der Höhe der entsprechenden Tages- bzw. Nachttemperaturen, die durch die linken unteren vier Anzeige-/Bedienfelder eingestellt werden können. Hierzu dienen ebenfalls wiederum Pfeilfelder 13, die zur Einstellung der entsprechend angezeigten Temperatur 14 dienen. Bei Veränderung bzw. Betätigen des entsprechenden Pfeilfeldes 13 verändert sich das obere bzw. untere Potential einer Heizkurve 16a und 16b.

Figur 6c zeigt eine weitere Ausführungsform der vierten Bedienebene 10d, die hier ebenfalls für unterschiedliche Zeiten unterschiedliche Ein-/Aus-Zustände unterschiedlicher Heizperioden definiert. Dazu dienen Anzeige-/Bedienfelder 7b, die bei Berühren entsprechend aktiviert werden und beispielsweise durch Beleuchtung des einzelnen Bedienfeldes dem Bediener anzeigen, dass nunmehr die Zeit innerhalb dieses Bedienfeldes durch Drücken der Pfeilfelder 13 verändert werden kann. Durch Drücken des Return-Feldes 13b lässt sich dann wieder in beispielsweise die dritte Bedienebene 10c zurückspringen.

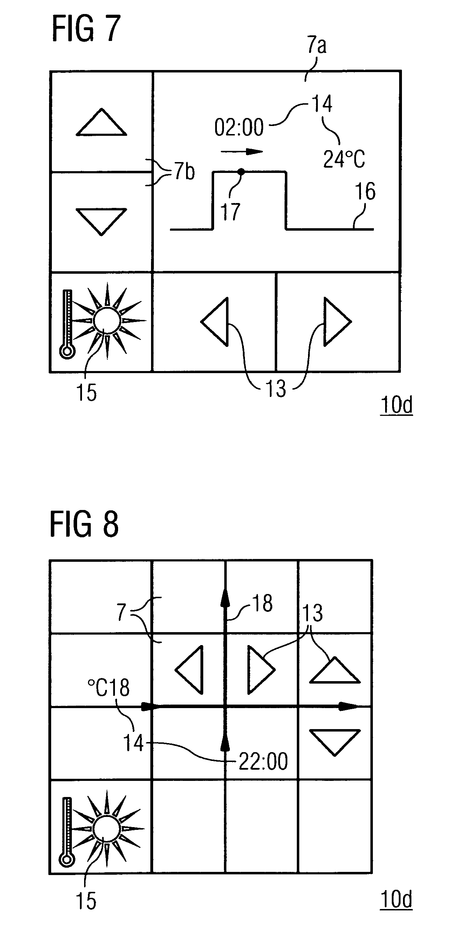

Figur 7 zeigt eine weitere Ausführungsform des Eingabe- und Anzeigefeldes 2 mit einem grossen Anzeigefeld 7a, welches über Bedienfelder 7b und darauf angebrachten Pfeilsymbolen 13 verändert wird. Auf einem unteren linken Anzeigefeld 15 befindet sich das Symbol für den jeweiligen Tageszeitraum, hier also beispielsweise den Tagesbetrieb. Durch das Betätigen der beiden linken oberen Pfeilfelder lässt sich also beispielsweise die entsprechende Tagestemperatur (hier 24° C) erhöhen oder verringern, während durch die unteren beiden rechten Pfeilfelder 13 der Zeitpunkt des Ein- bzw. Ausschaltens dieser Tagestemperatur verändert werden kann. Ein Punkt 17 bewegt sich dabei langsam auf der rechteckförmigen Kurve, so dass, je nachdem an welcher Position sich der Punkt befindet, entweder die linken beiden oberen Bedienfelder 7b oder die unteren beiden rechten Bedienfelder 13 aktiviert werden, so dass hier der Bediener intuitiv sowohl die richtige zeit als auch die richtige Temperatur einstellen kann.

Figur 8 zeigt eine weitere Ausführungsform der vierten Bedienebene 10d der Figur 7, wobei hier nicht eine rechteckförmige Kurve wie in Figur 7, sondern ein Koordinatenkreuz 18 angegeben ist, welches sowohl auf der horizontalen Achse die jeweils aktuelle Temperatur als auch auf der vertikalen Achse die jeweils gültige Uhrzeit angibt. Durch Betätigen der jeweiligen Pfeilfelder 13 lässt sich ein jeweils aktuell eingestellter Wert derart verändern, dass für den gewählten Prozesszustand 15 die entsprechende Temperatur für den entsprechenden Zeitraum oder Zeitpunkt eingestellt werden kann.

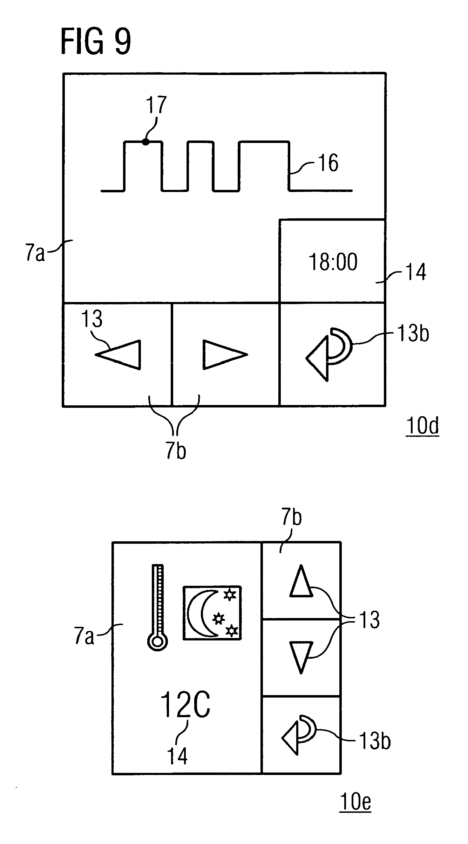

Figur 9 zeigt eine weitere Einstellmöglichkeit der vierten Bedienebene 10b, die wiederum eine fünfte Bedienebene 10e beinhaltet. Durch Drücken der linken unteren beiden Pfeilfelder 13 der vierten Bedienebene 10d lässt sich dynamisch der Punkt 17 auf der rechteckförmigen Heizkurve 16 verschieben, wobei gleichzeitig eine Anzeige 14 die jeweils aktuelle Uhrzeit angibt, an der sich der Punkt 17 auf der Kurve 16 befindet. Das obere grosse Anzeigefeld 7a dient daher lediglich zur dynamischen Anzeige des jeweils sich verändernden Prozessparameters, welcher durch die beiden unteren Pfeilfelder verändert werden kann. Durch Drücken des entsprechenden Return-Feldes 13b lässt sich dann für die jeweils ausgewählte Uhrzeit 14 in der sechsten Bedienebene 10e die aktuelle Tages- bzw. Nachttemperatur 14 einstellen, wobei hier das Bedienfeld 7a der sechsten Bedienebene 10e automatisch das jeweilige Nacht- oder Tagsymbol angibt, je nach dem, zu welcher Zeit 14 man in der fünften Bedienebene 10d das Return-Feld 13b gedrückt hat. Durch Drücken des Return-Feldes 13b der sechsten Bedienebene 10e lässt sich dann wieder in die fünfte Bedienebene 10d zurückspringen. Innerhalb der fünften Bedienebene 10d kann ein weiteres Feld (hier nicht gezeigt) vorgesehen sein, welches ein Rückspringen in die erste Bedienebene 10a nach Figur 4 gewährleistet.

## Patentansprüche

1. Eingabe- und Anzeigevorrichtung (1) für Prozessparameter einer gebäudetechnischen Anlage, mit:
einer Vorderseite, die ein Gehäuse der Eingabe- und Anzeigevorrichtung (1) bedienerseitig abschliesst, und an der ein Bediener Prozessparameter eingeben und ablesen kann,
einem Eingabe- und Anzeigefeld (2), das sich über die gesamte Vorderseite erstreckt, so dass in einem Betriebszustand bedienerseitig nur das Eingabe- und Anzeigefeld sichtbar ist; und
einem im Gehäuse vorhandenen Temperatursensor zur Bestimmung einer Umgebungstemperatur.

2. Vorrichtung (1) nach Anspruch 1, bei der das Eingabe-und Anzeigefeld (2) ein berührungsempfindliches Element enthält.

3. Vorrichtung (1) nach Anspruch 1 oder 2, bei der durch das Eingabe- und Anzeigefeld (2) verschiedene Bedienebenen (10a,...10e) darstellbar sind, über die Prozessparameter (14, 16) über unterschiedliche Anzeige-/Bedienfelder (7, ... 7f, 13) eingebbar sind.

4. Vorrichtung (1) nach Anspruch 3, bei der die Prozessparameter (14, 16) über die Anzeige-/Bedienfelder (7, ...7f) eingebbar sind, die je nach gewählter Bedienebene (10a,...10e) ihre Funktion, Bedeutung und/oder Grösse ändern, und bei der die variablen Anzeige-/Bedienfelder (7, ...7f) für unterschiedliche Bedienebenen (10a,...10e) mindestens teilweise an unterschiedlichen Positionen liegen.

5. Vorrichtung (1) nach Anspruch 1, bei der das Eingabe-und Anzeigefeld (2) ein berührungsempfindliches und transparentes Eingabefeld aufweist, das unterschiedliche Bedienfelder (7, ...7f) aufweist, die Berührungen detektieren und weiterleiten, sowie unterhalb des Eingabefeldes liegende Oberflächen, Anzeigen oder Objekte sichtbar machen.

6. Vorrichtung (1) nach Anspruch 3, bei der eine Öffnung zur Aufnahme von Karten vorhanden ist, die die unterschiedlichen Bedienebenen (10a,...10e) definieren, sowie Mittel zur Detektion der Art der jeweiligen Karte.

7. Vorrichtung (1) nach Anspruch 6, bei die Karten die unterschiedlichen Bedienebenen (10a,...10e), die Funktionen der Vorrichtung (1) und die Darstellung und Wahl von zumindest Teilen der Anzeige-/Bedienfelder (7, ...7f) definieren.

8. Vorrichtung (1) nach Anspruch 7, bei der die Karten magnetische, elektromagnetische, mechanische, elektronische oder optische Datenträger sind, und das die Vorrichtung (1) entsprechende Mittel zur Kommunikation mit der entsprechenden Karte aufweist.
